# EUROPÄISCHE PATENTSCHRIFT

(11) **EP 2 344 734 B1**
(45) Veröffentlichungstag und Bekanntmachung des Hinweises auf die Patenterteilung: **20.03.2013**
(21) Anmeldenummer: 09737369.0
(22) Anmeldetag: 17.10.2009
(51) Int. Cl.: F01N 3/20

(54) **VERFAHREN ZUR SELEKTIVEN KATALYTISCHEN REDUKTION VON STICKOXIDEN IM ABGAS VON BRENNKRAFTMASCHINEN**
METHOD FOR SELECTIVE CATALYTIC REDUCTION OF NITROGEN OXIDES IN EXHAUST GAS OF INTERNAL COMBUSTION ENGINES
PROCÉDÉ DE RÉDUCTION CATALYTIQUE SÉLECTIVE DES OXYDES D'AZOTE DANS LES GAZ D'ÉCHAPPEMENT D'UNE MACHINE À COMBUSTION INTERNE

(30) Priorität: 12.11.2008 DE 102008056860
(43) Veröffentlichungstag der Anmeldung: 20.07.2011
(73) Patentinhaber: Bayerische Motoren Werke Aktiengesellschaft, 80809 München (DE)
(72) Erfinder: BAUMEISTER, Thomas, 80638 München (DE)
(86) Internationale Anmeldenummer: PCT/EP2009/007465
(87) Internationale Veröffentlichungsnummer: WO 2010/054733

(56) Entgegenhaltungen:
- DE-A1- 19 818 448
- DE-A1-102004 052 189
- DE-A1-102007 017 459

## Beschreibung

Die Erfindung bezieht sich auf ein Verfahren zur selektiven katalytischen Reduktion von Stickoxiden im Abgas von Brennkraftmaschinen nach dem Oberbegriff des Patentanspruchs 1.

Ein derartiges Verfahren ist aus der Literatur und von Nutzfahrzeugen als sogenanntes SCR-System vielfach bekannt. Beispielsweise in der DE 10 2004 052 189 A1 wird ein SCR-System und ein Verfahren zur selektiven katalytischen Reduktion von Stickoxiden im Abgas von selbstzündenden Brennkraftmaschinen mit Fokus auf die generelle richtige Dosierung des Reduktionsmittels beschrieben. Zum weiteren technischen Hintergrund wird auf die Patentdokumente DE 198 18 448 A1 und DE 10 2007 017 459 A1 hingewiesen.

Mit dem bekannten SCR-Verfahren (Selective Catalytic Reduction) wird der Stickoxid-Ausstoß bei Dieselmotoren drastisch verringert und mit Hilfe einer Harnstofflösung als am häufigsten eingesetztes Reduktionsmittel, insbesondere AdBlue genannt, in Wasserdampf und Stickstoff umgewandelt. AdBlue wird in Kraftfahrzeugen in einem Zusatztank (Reduktionsmittel-Behälter) mitgeführt und in die Abgasanlage eingespritzt. Dosiersysteme in der Abgasanlage tragen in Verbindung mit einem SCR-Katalysator dazu bei, Stickoxidemissionen und Rußpartikel zu reduzieren. Da die Harnstofflösung bereits bei einer Temperatur von etwa 12 Grad minus gefriert, muss sie zumindest im Bereich der Ablaufleitung beheizt werden, um gegebenenfalls gefrorenes AdBlue zumindest partiell aufzutauen. Durch das Absaugen von teilweise aufgetauter Harnstofflösung kann es zu einer Eishöhlenbildung um das Heizelement und die Absaugstelle herum kommen.

Es ist Aufgabe der Erfindung, das Verfahren eingangs genannter Art im Hinblick auf eine Erkennung und Verminderung von Eishöhlenbildung zu verbessern.

Diese Aufgabe wird erfindungsgemäß durch den Gegenstand des Patentanspruchs 1 gelöst. Die abhängigen Patentansprüche sind vorteilhafte Weiterbildungen der Erfindung.

Der Erfindung liegen folgende Erkenntnisse zugrunde:

Die Ansteuerung des Heizelements erfolgt mit dem Ziel einer Erwärmung des Reduktionsmittels. Eine Erwärmung zieht eine Widerstandserhöhung des Heizelements nach sich. Somit ist der Widerstand ein Maß für die im Heizelement gespeicherte Energie und die Temperaturveränderung ein Maß für die umgesetzte Leistung. Wird das Heizelement mit Heizstrom beaufschlagt, so erwärmt sich das PTC-Heizelement und der Widerstand erhöht sich. Abhängig vom Energieeintrag in das PTC-Heizelement und der Heizelementbenetzung stellen sich ein Temperaturniveau und ein Widerstandswert ein. Es ergibt sich ein Widerstandsverlauf bei unterschiedlichen Benetzungsgraden des Heizelements. Der Widerstandsverlauf kann abhängig sein von der absoluten Energiezufuhr, der Energieableitung entsprechend der Benetzung der Starttemperatur, der Zeit und der Energiezufuhr pro Zeit. Allgemein ist aber der Endwert und auch der Anstieg des Widerstandes umso größer je geringer die Benetzung und damit der Wärmeableitung ist.

Erfindungsgemäß wird daher zwischen folgenden drei Betriebszuständen unterschieden:

### Detektion Normalbetrieb (= vollbenetzt):

Der Widerstand steigt über eine zu definierende Zeit und kommt zu einer Einregelung derart, dass der Verlauf des Widerstandes in etwa eine Steigung von Null aufweist. Der eingeregelte Widerstand bleibt dann unterhalb der ersten Widerstands- und/oder Gradientenschwelle.

### Detektion Teilbenetzungsbetrieb:

Falls der Widerstand einen Wert oberhalb der ersten Widerstands- und/oder Gradientenschwelle, der für Teilbenetzung spricht, annimmt, aber unterhalb einer zweiten Widerstands- und/oder Gradientenschwelle, der für die Erkennung einer Eishöhle - also einer nicht kühlenden Luftumgebung - definiert ist, wird die abtransportierte Reduktionsmittelmenge reduziert, um wieder ein vermehrtes Auftauen des gefrorenen Reduktionsmittels zu ermöglichen.

### Detektion Eishöhle:

Wird die zweite Widerstands- und/oder Gradientenschwelle für die Eishöhlenerkennung überschritten, müssen stärkere Sicherheitsmaßnahmen ergriffen werden als bei Teilbenetzungsbetrieb.

Durch die Erfindung wird nicht nur die Funktionsfähigkeit eines SCR-Verfahrens sichergestellt, sondern auch eine einfache Diagnose der benutzten Komponenten, wie des Heizelements oder des Füllstandssensors, ermöglicht. Denn die Signale des Füllstandssensors und des Widerstandsverlaufes des PTC-Heizelements können bei bekannter Lage des Heizelementes zum Füllstandssensor in vergleichender Weise plausibilisiert werden.

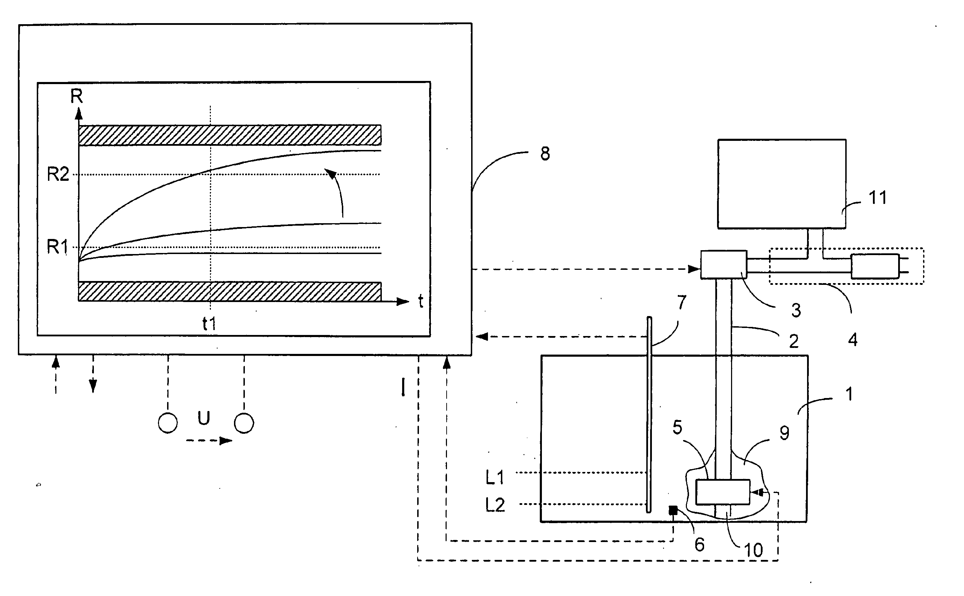

In der Zeichnung ist ein Ausführungsbeispiel der Erfindung dargestellt. Sie zeigt schematisch eine mögliche Vorrichtung mit den wesentlichsten Komponenten zur Durchführung des erfindungsgemäßen Verfahrens.

In der einzigen Figur ist ein Reduktionsmittel-Behälter 1 dargestellt, der beispielsweise eine Harnstofflösung als Reduktionsmittel enthält. Aus dem Reduktionsmittel-Behälter 1, der in einem hier nicht dargestellten Kraftfahrzeug mit Brennkraftmaschine 11 eingebaut sein soll, wird das Reduktionsmittel über eine Ablaufleitung 2 mittels einer Pumpe 3 und gegebenenfalls weiteren Dosiervorrichtungen in die Abgasanlage 4 der Brennkraftmaschine 11 eingeleitet. Da die Harnstofflösung bereits bei einer Temperatur von etwa 12 Grad minus gefriert, muss sie zumindest im Bereich der Absaugstelle 10 der Ablaufleitung 2 beheizt werden, um gegebenenfalls gefrorene Harnstofflösung zumindest partiell aufzutauen. Hierzu ist vorzugsweise am Boden des Reduktionsmittel-Behälters 1 ein PTC-Heizelement 5 in nächster Nähe der Absaugstelle 10 vorgesehen.

Durch das Absaugen von teilweise aufgetauter Harnstofflösung kann es zur unerwünschten Ausbildung einer Eishöhle 9 um das Heizelement 5 und die Absaugstelle 10 herum kommen. Ein elektronisches Steuergerät 8 ist mit der Pumpe 3 und/oder anderen Fördermitteln zum Einbringen des Reduktionsmittels in das Abgas verbunden. Weiterhin ist das Heizelement 5, hier ein PTC-Heizelement, ebenfalls an das Steuergerät 8 angeschlossen und wird bedarfsweise von diesem mit Heizstrom I beaufschlagt. Das Steuergerät 8 erhält vorzugsweise Signale eines Temperatursensors 6 und eines Füllstandssensors 7. Das Steuergerät 8 wird von der Bordnetzspannung U des Kraftfahrzeugs versorgt und kann gegebenenfalls weitere Ein- und Ausgangs-Pins aufweisen.

Erfindungsgemäß werden mittels der vorgenannten Vorrichtung folgende Verfahrensschritte durchgeführt:

Ein elektronisches Steuergerät 8 erfasst beispielsweise über das Signal des Temperatursensors 6 im Reduktionsmittel-Behälter 1, ob sich das Reduktionsmittel im gefrorenen Zustand befindet. Die Detektion des Aggregatszustandes kann zusätzlich oder alternativ z. B. auch über den Füllstandssensor 7 vorgenommen werden, wenn dieser derart ausgeführt ist, dass er eine Schwappbewegung oder die Medium-Leitfähigkeit erfassen kann. Im gefrorenen Zustand findet keine Schwappbewegung statt und die Leitfähigkeit ist gering.

Das Steuergerät 8 beaufschlagt das PTC-Heizelement 5 im Reduktionsmittel-Behälter 1 mit Heizstrom I, wenn sich das Reduktionsmittel gemäß der detektierten Aggregatszustandsinformation im gefrorenen Zustand befindet. Das Steuergerät 8 berechnet den Widerstand R des PTC-Heizelementes aus der Bordspannung U des Kraftfahrzeuges und dem Heizstrom I. Der Widerstand R bzw. der Verlauf des Widerstandes R wird anschließend im Steuergerät 8 mit einer ersten definierten Widerstandsschwelle R1 und/oder mit einer ersten definierten Gradientenschwelle des Widerstandsanstieges verglichen. Das elektronische Steuergerät 8 veranlasst durch geeignete Maßnahmen eine Reduktion der in das Abgas geleitete Reduktionsmittel-Menge, wenn die erste Widerstandsschwelle R1 und/oder die erste Gradientenschwelle überschritten wurde, da in diesem Fall auf Teilbenetzung und somit drohende Eishöhlenbildung geschlossen wird. D. h. die erste Widerstandsschwelle R1 und/oder die erste Gradientenschwelle wird derart definiert, dass damit ein Übergang vom voll benetzten in den teilweise benetzten Betrieb erkannt wird. Ergänzend wird daraufhin gewiesen, dass das Steuergerät 8 beispielsweise ein ohnehin vorhandenes und um die betroffene Funktion erweitertes Motorsteuergerät ist oder ein mit einem elektronischen Motorsteuergerät beispielweise über einen Datenbus verbundenes zusätzliches Steuergerät ist. In letztem Fall informiert das Steuergerät 8 das Motorsteuergerät entsprechend, welches seinerseits durch geeignete Maßnahmen eine Verringerung der Reduktionsmittel-Menge herbeiführt. Im ersten Fall kann das Steuergerät 8 selbst, beispielweise durch entsprechende Ansteuerung der Pumpe 3, eine Reduzierung der Reduktionsmittel-Menge herbeiführen.

Wird eine zweite Widerstandsschwelle R2 und/oder eine zweite Gradientenschwelle überschritten, wobei die ersten Schwelle R1 kleiner als die zweiten Schwelle R2 ist, unterbricht das elektronische Steuergerät 8 die Zuleitung des Reduktionsmittels vom Reduktionsmittel-Behälter 1 in die Abgasanlage 4 vollständig. Weiterhin kann das elektronische Steuergerät 8 eine Warnung an den Fahrer ausgeben, frühestens, wenn die erste Widerstandsschwelle R1 und/oder die erste Gradientenschwelle überschritten wird, oder spätestens, wenn die zweite Widerstandsschwelle R2 und/oder die zweite Gradientenschwelle überschritten wird, da in letztem Fall bereits auf ein unbenetztes Heizelement geschlossen wird. D. h. die zweite Widerstandsschwelle R2 und/oder die zweite Gradientenschwelle wird derart definiert, dass damit ein Übergang vom teilweise benetzten in den unbenetzten Betrieb erkannt wird.

Ergänzend wird daraufhingewiesen, dass unter der Auswertung des Widerstandes R auch die Auswertung einer zum Widerstand R proportionalen Größe, z. B. des Leitwertes 1/R, mit entsprechenden definierten Schwellwerten zu verstehen ist. Die Auswertung der Leistung (U*I) wird hier eher als unvorteilhaft angesehen, da sich dabei Bordnetzschwankungen auf die Genauigkeit der Auswertung negativ auswirken würden.

Vorzugsweise überprüft das elektronische Steuergerät 8 mittels des Signals des zusätzlichen Füllstandssensors 7, ob das Ansteigen des berechneten Widerstandes R eine Folge einer Eishöhle 9 oder eine Folge des niedrigen Füllstandes im Reduktionsmittel-Behälter 1 ist. Signalisiert beispielsweise der Füllstandssensor 7 einen Füllstand, der über einem ersten Pegel L1 liegt, wird auf eine Eishöhle 9 geschlossen. Signalisiert beispielsweise der Füllstandssensor 7 einen Füllstand, der zwischen dem Pegel L1 und einem zweiten Pegel L2 liegt, wird auf zunehmende Teilbenetzung des Heizelements 5 durch erhöhte Leerung des Behälters 1 geschlossen. In diesem Fall kann beispielsweise die zweite Widerstandsschwelle R2 erhöht werden. Signalisiert beispielsweise der Füllstandssensor 7 einen Füllstand, der unter dem zweiten Pegel L2 liegt, wird auf leeren oder bald leeren Behälter 1 geschlossen und in diesem Fall beispielsweise eine entsprechende Information an den Fahrer ausgegeben. Der Pegel L1 wird vorzugsweise knapp über dem oberen Rand des Heizelementes 5 festgelegt. Der Pegel L2 wird vorzugsweise knapp über dem unteren Rand des Heizelementes 5 festgelegt, so dass sich ein Messtoleranzbereich bei Füllstandsschwankungen ergibt.

Die in der Zeichnung schraffiert dargestellten Widerstandsbereiche im schematisch dargestellten und im Steuergerät 8 integrierten Kennfeld des Widerstandes R über der Zeit t können als unzulässige Bereiche für die Erkennung eines Defekts des PTC-Heizelementes definiert sein. Der Zeitpunkt t1 soll der Auswertezeitpunkt der Widerstandskennlinien nach einer definierten Zeitspanne ab dem Einschalten des Heizstromes I sein.

## Patentansprüche

1. Verfahren zur selektiven katalytischen Reduktion von Stickoxiden im Abgas von Brennkraftmaschinen in Kraftfahrzeugen, bei dem Reduktionsmittel aus einem fahrzeuginternen Reduktionsmittel-Behälter (1) in das Abgas der Brennkraftmaschine (11) geleitet wird, **dadurch gekennzeichnet,**
- **dass** ein elektronisches Steuergerät (8) über das Signal eines Sensors (6; 7) im Reduktionsmittel-Behälter (1) erfasst, ob sich das Reduktionsmittel im gefrorenen Zustand befindet,
- **dass** das elektronische Steuergerät (8) ein PTC-Heizelement (5) im Reduktionsmittel-Behälter (1) mit Heizstrom (I) beaufschlagt, wenn sich das Reduktionsmittel im gefrorenen Zustand befindet,
- **dass** das elektronische Steuergerät (8) den Widerstand des PTC-Heizelementes (5) aus der Bordspannung (U) des Kraftfahrzeuges und dem Heizstrom (I) berechnet und mit einer ersten definierten Widerstandsschwelle (R1) und/oder mit einer ersten definierten Gradientenschwelle des Widerstandanstieges vergleicht,
- und **dass** das elektronische Steuergerät (8) die vom Reduktionsmittel-Behälter (1) in die Abgasanlage (4) geleitete Reduktionsmittel-Menge reduziert, wenn die erste Widerstandsschwelle (R1) und/oder die erste Gradientenschwelle überschritten wird.

2. Verfahren nach Patentanspruch 1, **dadurch gekennzeichnet, dass** das elektronische Steuergerät (8) die Zuleitung des Reduktionsmittels vom Reduktionsmittel-Behälter (1) in die Abgasleitung (4) unterbricht, wenn eine zweite Widerstandsschwelle (R2) und/oder eine zweite Gradientenschwelle überschritten wird, wobei die ersten Schwellen (R1) kleiner als die zweiten Schwellen (R2) sind.

3. Verfahren nach einem der vorangegangenen Patentansprüche, **dadurch gekennzeichnet, dass** das elektronische Steuergerät (8) eine Warnung an den Fahrer ausgibt, frühestens, wenn die erste Widerstandsschwelle (R1) und/oder die erste Gradientenschwelle überschritten wird, oder spätestens, wenn die zweite Widerstandsschwelle (R2) und/oder die zweite Gradientenschwelle überschritten wird.

4. Verfahren nach einem der vorangegangenen Patentansprüche, **dadurch gekennzeichnet, dass** das elektronische Steuergerät (8) mittels des Signals eines Füllstandssensors (7) überprüft, ob das Ansteigen des berechneten Widerstandes (R) eine Folge einer Eishöhle (9) oder eine Folge des niedrigen Füllstandes im Reduktionsmittel-Behälter (1) ist.

## Claims

1. A method for the selective catalytic reduction of nitrogen oxides in the exhaust gas of internal combustion engines in motor vehicles, wherein reducing agent is guided from a reducing agent container (1) internal to the vehicle into the exhaust gas of the internal combustion engine (11), **characterised in that**
- an electronic control device (8) detects by way of the signal of a sensor (6; 7) in the reducing agent container (1) whether the reducing agent is in the frozen state,
- the electronic control device (8) applies heating current (I) to a PTC heating element (5) in the reducing agent container (1) when the reducing agent is in the frozen state,
- the electronic control device (8) calculates the resistance of the PTC heating element (5) from the onboard voltage (U) of the motor vehicle and the heating current (I) and compares it with a first defined resistance threshold (R1) and/or with a first defined gradient threshold of the resistance increase,
- and **in that** the electronic control device (8) reduces the reducing agent quantity guided from the reducing agent container (1) into the exhaust gas system (4), if the first resistance threshold (R1) and/or the first gradient threshold is exceeded.

2. A method according to claim 1, **characterised in that** the electronic control device (8) interrupts the feeding of the reducing agent from the reducing agent container (1) into the exhaust gas line (4) if a second resistance threshold (R2) and/or a second gradient threshold is exceeded, the first thresholds (R1) being lower than the second thresholds (R2).

3. A method according to any one of the preceding claims, **characterised in that** the electronic control device (8) emits a warning to the driver, at the earliest when the first resistance threshold (R1) and/or the first gradient threshold is exceeded, or at the latest when the second resistance threshold (R2) and/or the second gradient threshold is exceeded.

4. A method according to any one of the preceding claims, **characterised in that** the electronic control device (8) checks by means of the signal of a filling level sensor (7) whether the increase in the calculated resistance (R) is a result of an ice cavity (9) or a result of the low filling level in the reducing agent container (1).

## Revendications

1. Procédé de réduction catalytique sélective des oxydes d'azote présents dans les gaz d'échappement d'un moteur à combustion interne de véhicule automobile selon lequel l'agent réducteur est transféré d'un réservoir d'agent réducteur (1) interne au véhicule dans les gaz d'échappement du moteur (11),
**caractérisé en ce que** :
- un appareil de commande électronique (8) détecte par l'intermédiaire du signal d'un détecteur (6, 7) si l'agent réducteur se trouve à l'état congelé dans le réservoir d'agent réducteur (1),
- l'appareil de commande électronique (8) alimente un élément chauffant à coefficient de température positif PTC (5) situé dans le réservoir d'agent réducteur (1) en un courant de chauffage (I) lorsque l'agent réducteur se trouve à l'état congelé,
- l'appareil de commande électronique (8) calcule la résistance de l'élément chauffant PTC (5) à partir de la tension de bord (U) du véhicule et du courant de chauffage (I) et la compare à un premier seuil de résistance défini (R1) et/ou à un premier seuil de gradient défini de l'augmentation de la résistance, et
- l'appareil de commande électronique (8) réduit la quantité d'agent réducteur transférée du réservoir d'agent réducteur (1) dans l'installation des gaz d'échappement (4) lorsque le premier seuil de résistance (R1) et/ ou le premier seuil de gradient est dépassé.

2. Procédé conforme à la revendication 1,
**caractérisé en ce que**
l'appareil de commande électronique (8) interrompt le transfert de l'agent réducteur du réservoir d'agent réducteur (1) dans la conduite des gaz d'échappement (4) lorsqu'un second seuil de résistance (R2) et/ou un second seuil de gradient est dépassé, les premiers seuils (R1) étant inférieurs aux seconds seuils (R2).

3. Procédé conforme à l'une des revendications précédentes,
**caractérisé en ce que**
l'appareil de commande électronique (8) transmet une alarme au conducteur au plus tôt lorsque le premier seuil de résistance (R1) et/ou le premier seuil de gradient est dépassé ou au plus tard lorsque le second seuil de résistance (R2) et/ou le second seuil de gradient est dépassé.

4. Procédé conforme à l'une des revendications précédentes,
**caractérisé en ce que**
l'appareil de commande électronique (8) contrôle au moyen du signal d'un capteur d'état de remplissage (7) si l'augmentation de la résistance (R) calculée est la conséquence d'une cavité (9) dans la glace ou la conséquence d'un faible état de remplissage dans le réservoir d'agent réducteur (1).
